# EUROPÄISCHE PATENTANMELDUNG

(11) **EP 1 109 358 A2**
(43) Veröffentlichungstag der Anmeldung: **20.06.2001**
(21) Anmeldenummer: 00127172.5
(22) Anmeldetag: 12.12.2000
(51) Int. Cl.: H04L 12/413, G06F 13/374

(54) **Verfahren zur Steuerung von Zugriffswettbewerben für an einen Bus angeschlossene Stationen**

(30) Priorität: 17.12.1999 DE 19960967
(71) Anmelder: Tenovis GmbH & Co. KG, 60326 Frankfurt (DE)
(72) Erfinder: Schmidt, Werner, Dipl.-Ing., 63762 Grossostheim (DE)
(74) Vertreter: Bohnenberger, Johannes, Dr.

(57) **Zusammenfassung**

Das Verfahren ermöglicht, mehrere Zugriffswettbewerbe in Kaskaden durchzuführen. Das Verfahren umfaßt, daß eine Wettbewerbsnummer einer sendewilligen Station in Schritten auf Steuerleitungen (4) geschaltet wird, daß zwischen den Schritten dieses Zugriffswettbewerbs weitere Zugriffswettbewerbe in Schritten durchgeführt werden, daß die einzelnen Zugriffswettbewerbe priorisiert werden und daß jede an einem Zugriffswettbewerb teilnehmende Station die stattfindenden Zugriffswettbewerbe überwacht und daß, wenn mindestens eine Station mit einer höheren Wettbewerbsnummer als die der überwachenden Stationen an einem mindestens gleich priorisierten Wettbewerb wie die überwachende Station teilnimmt, die überwachende Station aus dem Zugriffs-wettbewerb zurückgezogen wird. Die an den Zugriffswettbewerben teilnehmenden Stationen führen eine Fehlerüberwachung der Wettbewerbsnummern durch.

## Beschreibung

### Stand der Technik

Die Erfindung geht aus von einem Verfahren zur Steuerung von Zugriffswettbewerben für an einen Bus angeschlossene Stationen nach der Gattung des unabhängigen Patentanspruchs.

Es ist bereits aus der Offenlegungsschrift DE 4304187 bekannt, daß für an einen Bus angeschlossene Stationen in mehreren Schritten ein Zugriffswettbewerb durchgeführt wird, weil eine Wettbewerbsnummer solch eine Länge aufweist, so daß die Wettnewerbsnummer nur in Teilen auf den Bus geschaltet werden kann. Der Bus und die angeschlossenen Stationen gehören zu einer Vermittlungseinrichtung.

Dabei ist der Abstand zwischen den einzelnen Schritten des Zugriffswettbewerbs so gewählt, daß eine Station das von ihr gesendete Signal, also einen Teil der Wettbewerbsnummer, empfangen und ausgewertet hat, bevor die Signale des nächsten Schritts auf den Bus geschaltet werden oder ein Rückzug von dem Zugriffswettbewerb stattfindet, falls ein Teil einer höher priorisierte Wettbewerbsnummner erkannt wird.

### Vorteile der Erfindung

Das erfindungsgemäße Verfahren mit den Merkmalen des unabhängigen Patentanspruchs hat demgegenüber den Vorteil, daß durch ein Ausnutzen von Zeitlücken zwischen den Schritten eines Zugriffswettbewerbs ein Zugriffswettbewerb schneller durchgeführt wird, so daß höhere Übertragungsraten über den Bus ermöglicht werden und eine optimalere Ausnutzung der vorhandenen Struktur der Vermittlungseinrichtung ermöglicht wird.

Weiterhin wird ein Zeitvorteil erreicht, trotz eines geringeren Aufwandes, da die vorhandene Struktur der Vermittlungseinrichtung verwendet wird und lediglich durch ein verbessertes Verfahren die erfindungsgemäßen Vorteile erzielt werden, wobei insbesondere eine quasi Parallelität der Zugriffswettbewerbe erreicht wird.

Durch die in den abhängigen Ansprüchen aufgeführten Maßnahmen sind vorteilhafte Weiterbildungen und Verbesserungen des im unabhängigen Patentanspruchs angegebenen Verfahrens möglich.

Besonders vorteilhaft ist, daß eine Station höchstens an einem Zugriffswettbewerb teilnehmen kann, so daß eine eindeutige Zuordnung der Stationen möglich ist und damit eine Station für sich klar entscheidet, wann sie aus dem Zugriffswettbewerb ausscheidet oder ob sie ihn gewinnt oder ob sie zumindest in dem Zugriffswettbewerb verbleibt.

Darüber hinaus ist es von Vorteil, daß die Zugriffswettbewerbe, die quasi parallel ablaufen, nach ihrer Reihenfolge priorisiert werden. Dabei wird vorteilhafterweise auch ein Zeitfaktor in den Zugriffswettbewerb als zusätzliches Ausscheidungskriterium eingeführt.

Durch eine Verwendung von Steuerleitungen, die der Bus aufweist, wird eine effiziente Übertragung der Wettbewerbsnummern für den Zugriffswettbewerber ermöglicht. Weiterhin werden dabei die Übertragungen der Wettbewerbsnummern durch Nutzdatenübertragungen nicht beeinträchtigt.

### Zeichnung

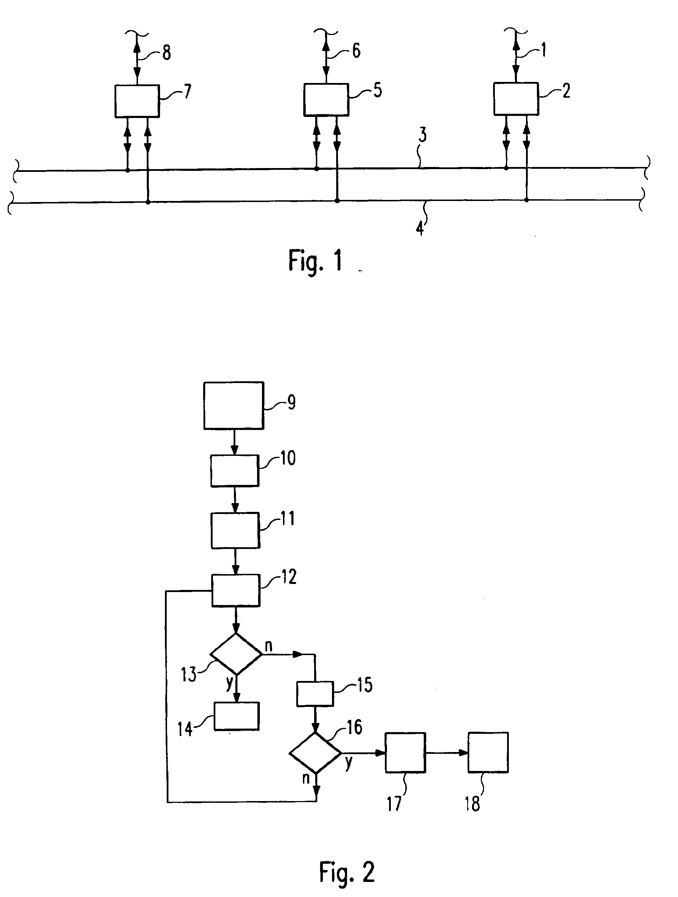

Ausführungsbeispiele der Erfindung sind in der Zeichnung dargestellt und in der nachfolgenen Beschreibung näher erläutert. Es zeigen Figur 1 ein Schema einer Vermittlungsanlage mit einem Bus und Figur 2 das erfindungsgemäße Verfahren.

### Beschreibung

Vermittlungseinrichtungen, insbesondere für ATM (Asynchronous Transfer Mode), weisen einen Bus auf, über den die zu vermittelnden Daten von einer Station zu einer weiteren Station übertragen werden. Die Stationen sind weiterhin mit Datenleitungen verbunden, über die die zu vermittelnden Daten übertragen und empfangen werden.

Eine Methode, die Kommunikation über den Bus der Vermittlungseinrichtung zu regeln, ist die Verwendung eines Zugriffswettbewerbs. Bei einem Zugriffswettbewerb versuchen in einem Zeitabschnitt, Stationen, die über den Bus Daten übertragen wollen, eine Sendeberechtigung zu erlangen.

Bei dem Zugriffswettbewerb muß jede Station, die eine Wettbewerbsnummer sendet, diese gesendete Wettbewerbsnummer mit den anderen Wettbewerbsnummern der auch eine Sendeberechtigung begehrenden Stationen vergleichen. Um diesen Vergleich durchzuführen, vergeht Zeit. Je nach Länge des Zugriffswettbewerbs beeinträchtigt dies die Übertragungsrate des Buses. Dies wird umso dringlicher, da ein Zugriffswettbewerb derart durchgeführt wird, daß eine Wettbewerbsnummer in mehreren Schritten auf den Bus geschaltet wird, da die Wettbewerbsnummer eine solche Länge aufweist, die die Aufteilung erfordert. Daher entsteht zwischen den Schritten eine Totzeit, die für Datenübertragungen ungenutzt bleibt.

Empfängt eine an dem Zugriffswettbewerb teilnehmende Station ihre eigene Wettbewerbsnummer, dann erkennt die Station, daß sie den Zugriffswettbewerb gewonnen hat, denn in diesem Fall haben sich allen anderen Stationen von dem Zugriffswettbewerb zurückgezogen.

Weiterhin erkennt eine Station aus der Überlagerung von mehreren Wettbewerbsnummern, ob ihre Wettbewerbsnummer die größte ist oder nicht. Die Überlagerung wird auch als Codierung bezeichnet. Wird bei dem schrittweisen Vergleich, der mit den höchstwertigsten Bits einer Wettbewerbsnummer beginnt, um rasch Wettbewerbsnummern ausschließen zu können, für mehrere Wettbewerbsnummern eine Gleichheit festgestellt, werden alle diese Stationen im Zugriffswettbewerb verbleiben, um in den folgenden Schritten des Zugriffswettbewerbs die entsprechenden Stationen dann auszuschließen. Die entstehende Codierung einer Überlagerung von Wettbewerbsnummern ist so ausgelegt, daß dadurch keine neue Wettbewerbsnummer entsteht, und es eindeutig für eine Station ist, ob die eigene Wettbewerbsnummer größer, gleich oder kleiner als die größte auf dem Bus befindliche Wettbewerbsnummer ist. Ein einfaches Beispiel illustriert dies: Wenn für eine Übertragung der Wettbewerbsnummer n Leitungen zur Verfügung stehen, so können die Nummern beziehungsweise Teilnehmer folgendermaßen gewählt werden:
Teilnehmer 1: 0....01
Teilnehmer 2: 0....11
...
Teilnehmer n: 1....11

Teilnehmer n hat die höchste, Teilnehmer 1 die niedrigste Priorität, wenn man voraussetzt, daß das Ruhesignal auf dem Bus durch "0" gegeben ist. Durch eine Überlagerung von zwei Wettbewerbsnummern entsteht nur die größere der beiden Wettbewerbsnummern, d.h. es entsteht keine neue.

Die an den Bus angeschlossenen Stationen weisen einen Vergleicher auf, der ein besonderes Modul der Stationen darstellt, um den Vergleich durchzuführen. Der Vergleicher weist insbesondere einen entsprechenden Logikschaltkreis auf, der es erlaubt, eine Übereinstimmung oder einen Unterschied zu identifizieren.

Erfindungsgemäß wird daher die vorhandene Struktur der Vermittlungseinrichtung ausgenutzt, indem die Totzeit zwischen den Schritten des Zugriffswettbewerbs verwendet wird, um weitere Zugriffswettbewerbe quasi parallel zu dem ersten Zugriffswettbewerb durchzuführen.

In Figur 1 ist ein Schema einer Vermittlungsanlage dargestellt, wobei einzelne Stationen 2, 5 und 7 über einen BUS verbunden sind. Daß hier drei Stationen angeschlossen sind, ist rein beispielhaft, es können alternativ mehr oder weniger sein.

Die Datenleitungen 1, 6 und 8 sind jeweils an die Stationen 2, 5 und 7 über deren jeweils ersten Datenein-/ausgang angeschlossen. Die Station 2 ist weiterhin über ihren zweiten Datenein-/ausgang an einen Datenbus 3 angeschlossen. Über einen dritten Datenein-/ausgang ist die Station 2 an einen Steuerbus 4 angeschlossen. Der Datenbus 3 und der Steuerbus 4 machen zusammen den Bus der Vermittlungseinrichtung aus.

Die Station 5 ist über ihren zweiten Datenein-/ausgang an den Datenbus 3 angeschlossen, während sie über ihren dritten Datenein-/ausgang mit dem Steuerbus 4 verbunden ist. Die Station 7 ist ebenfalls über ihren zweiten Datenein-/ausgang an den Datenbus 3 angeschlossen und über ihren dritten Datenein-/ausgang mit dem Steuerbus 4 verbunden.

Über den Datenbus 3 werden Nutzdaten von einer Station zu einer weiteren Station übermittelt. Sollen beispielsweise von der Datenleitung 1 Daten weiter über die Datenleitung 8 übertragen werden, dann werden von der Station 2 die von der Datenleitung 1 kommenden Daten gepuffert und dann wird mittels eines Zugriffswettbewerbs, der auf dem Steuerbus 4 stattfindet, von der Station 2 versucht, einen Zugriffswettbewerb zu gewinnen.

Wird dieser Zugriffswettbewerb gewonnen, dann überträgt die Station 2 über den Datenbus 3 die von der Datenleitung 1 übertragenen Daten zu der Station 7, die dann die Daten auf die Datenleitung 8 weiterschaltet. Die Daten werden hier mit einem Worttakt, der einen Übertragungs- oder einen Steuerschritt auf dem Bus markiert, und dem Zell- oder Rahmentakt, der den Beginn des Übertragungszeitraums für eine Zelle anzeigt. Der Rahmentakt hängt von dem Worttakt und der Busbreite ab, d.h. wieviele Worttakte man benötigt, um einen Rahmen zu übertragen. Beispielsweise ist der Worttakt 100 MHz und damit der Rahmentakt 10 MHz, weil man 10 Worttakte für eine Rahmenübertragung benötigt.

In Teilbereichen eines Rahmens wird der Zugriffswettbewerb durchgeführt. Da wie oben dargestellt der Zugriffswettbewerb u.U. in mehreren Schritten durchgeführt wird und die Stationen gesendete und auf den Steuerleitungen befindliche Wettbewerbsnummern auswerten müssen, entstehen Totzeiten, in denen nichts passiert. Erfindungsgemäß werden daher diese Totzeiten ausgenutzt, um weitere Zugriffswettbewerbe durchzuführen. Dadurch entsteht eine Kaskadierung von mehreren Zugriffswettbewerben, wobei jede an den Zugriffswettbewerben teilnehmende Station alle Zugriffswettbewerbe überwacht, die zeitlich vor dem eigenen Zugriffswettbewerb begonnen haben. Daneben wird auch der eigene Zugriffswettbewerb überwacht. Dies ist notwendig, denn eine Station muß sich aus einem Zugriffswettbewerb zurückziehen, wenn eine Station an einem Zugriffswettbewer teilnimmt, der mindestens gleich priorisiert ist wie der der überwachenden Station, und wenn die neu teilnehmende Station eine Wettbewerbsnummer aufweist, die größer ist als die der überwachenden Station.

Die aufeinanderfolgenden Zugriffswettbewerbe werden nach ihrem Auftreten priorisiert, d.h. der erste stattfindende Zugriffswettbewerb erhält die höchste Priorität, der nachfolgende die zweithöchste usw. Die Zugriffswettbewerbe sind völlig beliebig priorisierbar, wenn den einzelnen Stationen die tatsächliche Priorität bekannt ist, denn in allen Fällen alle zeitlich versetzten Zugriffswettbewerbe abgelaufen sein müssen, bevor eine Übertragung stattfindet. Somit weiß jede Station aufgrund der bekannten Prioritäten, ob sie oder eine andere Station den Zugriffswettbewerb insgesamt gewonnen hat.

Einer Station ist es weiterhin nur gestattet, an einem Zugriffswettbewerb teilzunehmen. Dies ist logisch, denn würde eine Station an unterschiedlich priorisierten Wettbewerben teilnehmen und ihre gleich hohe Wettbewerbsnummer verwenden, dann würde sich die Station selbst aus einem Zugriffswettbewerb ausschließen, was einen Effizienzverlust bedeuten würde.

Eine an einem Zugriffswettbewerb teilnehmende Station führt weiterhin eine Fehlerüberwachung der Wettbewerbsnummern durch, indem eine gesendete Wettbewerbsnummer mit einer gespeicherten Wettbewerbsnummer verglichen wird, indem auf den Steuerleitungen 4 befindliche Codierungen dadurch überwacht werden, daß die darauf sich befindlichen Bit-Muster zulässig sind und daß zeitlich aufeinanderfolgende Bit-Folgen ebenfalls zulässig sind. Wird ein Fehler festgestellt, dann begehrt eine den Fehler identifizierende Station einen Zugriffswettbewerb, um einen Testlauf des Buses durchführen zu können. Dieser Testlauf hat demnach die höchste Priorität, da dies für den Erfolg von weiteren Übertragungen über den Bus von größter Wichtigkeit ist.

In Figur 2 ist das erfindungsgemäße Verfahren zur Steuerung von Zugriffswettbewerben für an einen Bus angeschlossenen Stationen dargestellt. In Verfahrensschritt 9 empfängt eine an den Bus angeschlossene Station 2, 5 oder 7 Daten über eine angeschlossene Datenleitung 1,6 oder 8.

Der Bus wird als Broadcast-/Multicast-Medium benutzt, d.h. eine sendende Station weiß nicht, ob, welche und wieviele andere Stationen die gesendeten Daten empfangen wollen. In Verfahrensschritt 10 wird daher die Information ermittelt, die man braucht, um die Daten auf dem Bus zu identifizieren. Es liegt also eine Auswertung durch die empfangende Station vor. Die sendende Station setzt an den Beginn der Datenübertragung eine Adreßinformation, die die anderen Stationen auswerten, um sie mit ihren abgespeicherten Adressen zu vergleichen, ob die Adressen der Datenübertragung anzeigen, daß die Station die Daten empfangen soll und auf einer Datenleitung weiterübertragen. Während des Verbindungsaufbaus einer Datenübertragung speichern nur die Stationen die Adressen der Datenübertragung, die diese Daten weitervermitteln beziehungsweise auf Datenleitungen schalten sollen. Es sind also immer die empfangenden Stationen, die die Auswertung vornehmen. Auf dem Bus sind damit verschiedene Kommunikationsverbindungen möglich: Punkt-zu-Punkt, wenn eine Station sendet und nur eine empfängt; Punkt-zu-Mehrpunkt, wenn eine Station sendet und mehrere empfangen; und Mehrpunkt-zu-Mehrpunkt, wenn mehrere Stationen senden und auch mehrere Stationen empfangen.

In Verfahrensschritt 11 wird daher die Station, die diese Daten empfangen hat, einen Zugriffswettbewerb durchführen. Für den Zugriffswettbewerb schaltet die jeweilige Station ihre Wettbewerbsnummer in Schritten auf die Steuerleitungen 4. Da dies in Schritten erfolgt, wird zwischen den einzelnen Schritten eine Zeit eingehalten, während der weitere Zugriffswettbewerbe durchgeführt werden können, da eine jeweilige Station ihren Zugriffswettbewerb überwachen und auswerten muß. Dadurch entsteht eine Kaskade von Zugriffswettbewerben. Die Zugriffswettbewerbe sind dabei zeitlich priorisiert.

In Verfahrensschritt 12 empfängt eine Station von den Steuerleitungen 4 die darauf befindlichen Kodierungen und wertet damit den Zugriffswettbewerb schrittweise aus. Es kommt damit zu einem schrittweisen Senden und Testen der Wettbewerbsnummern. In Verfahrensschritt 13 wird festgestellt, ob die sich auf den Steuerleitungen 4 befindliche Codierung darauf schließen läßt, daß eine Station an einem Zugriffswettbewerb teilgenommen hat, die eine höhere Wettbewerbsnummer auf die Steuerleitung 4 geschaltet hat. Ist dies der Fall, wird in Verfahrensschritt 14 die überwachende Station mit der niedrigeren Wettbewerbsnummer aus dem Zugriffswettbewerb zurückgezogen. Damit endet hier das Verfahren.

Ist der untersuchte Teil der Wettbewerbsnummer der überwachenden Station jedoch größer oder gleich als die der anderen an dem Zugriffswettbewerb teilnehmenden Stationen, wird in Verfahrensschritt 15 weiter ausgewertet, bis der Zugriffswettbewerb abgeschlossen ist, d.h. die komplette Wettbewerbsnummer ausgewertet ist. In Verfahrensschritt 16 wird daher festgestellt, ob der Zugriffswettbewerb bereits komplett durchgeführt wurde, d.h. ob die gesamte Wettbewerbsnummer auf die Steuerleitungen 4 geschaltet und ausgewertet wurde. Ist dies der Fall, wird in Verfahrensschritt 17 festgestellt, daß die überwachende Station der Sieger des Zugriffswettbewerbs ist, und die siegreiche Station kann in Verfahrensschritt 18 ihre Daten versenden, und zwar über den Datenbus 3. Wird in Verfahrensschritt 16 jedoch festgestellt, daß der Zugriffswettbewerb noch nicht komplett durchgeführt wurde, wird in Verfahrensschritt 12 fortgefahren, die sich auf den Steuerleitungen 4 befindlichen Codierungen auszuwerten.

Die Zahl der Arbitrierungsschritte liegt fest. Sie muß so festgelegt sein, daß die Zahl der Arbitrierungsschritte multipliziert mit der Zeitdauer pro Schritt addiert zu dem maximalen Versatz zwischen den einzelnen Arbitrierungsabläufen kleiner als die Übertragungsdauer eines Datenpakets ist. Nur dann ist vorteilhafterweise gewährleistet, daß die Arbitrierung den Datendurchsatz nicht beeinträchtigt. Während eine Datenübertragung läuft, wird schon für die Arbitrierung für die nächste Datenübertragung ausgeführt, so daß unter den genannten Bedingungen unmittelbar nach dem Ende einer Datenübertragung die nächste Datenübertragung beginnen kann.

Die Arbitrierung läuft immer über alle Schritte. Sie hat demnach eine feste Dauer, die mit den Rahmen für die Datenpakete gekoppelt ist. Wenn überhaupt keine Station Daten senden möchte, dann bleiben die Steuerleitungen, die für die Arbitrierungen verwendet werden, im Ruhezustand. Dann wird im nächsten Rahmen keine Datenübertragung stattfinden.

## Patentansprüche

1. Verfahren zur Steuerung von Zugriffswettbewerben für an einen Bus angeschlossene Stationen, wobei Daten über einen Bus in einer Richtung in einem Takt übertragen werden, wobei während des Zugriffswettbewerbs durch mindestens eine sendewillige Station ihre Wettbewerbsnummer in Schritten auf Steuerleitungen (4) geschaltet wird, dadurch gekennzeichnet, daß zwischen den Schritten des Zugriffswettbewerbs weitere Zugriffswettbewerbe in Schritten durchgeführt werden, daß die einzelnen Zu-griffswettbewerbe priorisiert werden, daß von jeder an einem Zugriffswettbewerb teilnehmenden Station die stattfindenden Zugriffswettbewerbe überwacht werden und daß, wenn mindestens eine Station (2,5,7) mit einer höheren Wettbewerbsnummer als die der überwachenden Station (2,5,7) an einem mindestens gleich priorisierten Zugriffswettbewerb wie die überwachende Station (2,5,7) teilnimmt, die überwachende Station aus dem Zugriffswettbewerb ausscheidet.

2. Verfahren nach Anspruch 1, dadurch gekennzeichnet, daß es einer Station (2,5,7) gestattet wird, höchstens an einem Zugriffswettbewerb teilzunehmen.

3. Verfahren nach Anspruch 1, dadurch gekennzeichnet, daß die Zugriffswettbewerbe nach der zeitlichen Reihenfolge priorisiert werden.

4. Verfahren nach einem der vorhergehenden Ansprüche, dadurch gekennzeichnet, daß die Wettbewerbsnummern auf die Steuerleitungen (4) des Busses geschaltet wird.

5. Verfahren nach einem der vorhergehenden Ansprüche, dadurch gekennzeichnet, daß eine Fehlerüberwachung der Wettbewerbsnummern durch die jeweilige Station (2,5,7) durchgeführt wird.
